# EUROPEAN PATENT APPLICATION

(11) **EP 0 529 928 A1**
(43) Date of publication of application: **03.03.1993**
(21) Application number: 92307567.5
(22) Date of filing: 19.08.1992
(51) Int. Cl.: F16J 15/08

(54) **A seal**

(30) Priority: 30.08.1991 GB 9118643; 08.01.1992 GB 9200327
(71) Applicant: ADVANCED PRODUCTS (SEALS AND GASKETS) LTD., Co. Durham DH8 6SR (GB)
(72) Inventor: Watson, Ian, Guisborough, Cleveland TS14 7BZ (GB)
(74) Representative: Carpmael, John William Maurice

(57) **Abstract**

A metal stem seal 1 comprising a resilient jacket 13 of annular shape and a spring 15 within the jacket 13 to urge the jacket 13 into contact with a stem 5, which reciprocates or rotates or does both, during use. Such a reciprocates or rotates or does both, during use. Such a seal provides a very efficient metal-to-metal seal, even when used in high pressure environments.

## Description

This invention relates to seals, and in particular to a metal stem seal which provides a reliable seal even when the stem is reciprocating or rotating.

Metal-to-metal seals are a very specialised form of seal, especially if the seal acts in a high pressure environment. Indeed, although such seals are known, they have, to date, not completely satisfied the requirements of the various industries in which they are used.

A known form of metal-to-metal seal for sealing a gap between a stem (or shaft) and a support housing comprises a C-shaped ring which sits between the shaft and the housing in a partly compressed state. The opening of the C-ring usually faces the region of highest pressure, thereby enabling the pressure to act on the inside of the C-ring to assist the sealing capability of the ring. Such seals are acceptable for use between a housing and a shaft which does not move to any great extent, but are not particularly reliable or satisfactory when used to seal a shaft which reciprocates or rotates or does both.

In the light of the foregoing, the present invention aims to improve upon known metal stem seals and to provide a new type of seal which is more efficient than those of the prior art for many different sizes of seal.

With the foregoing in mind, the present invention provides a dynamic metal stem seal comprising a resilient jacket of annular shape and a spring within the jacket to urge the jacket into contact with a stem, which reciprocates or rotates or does both, during use.

In one embodiment of the invention, the resilient jacket has a C-shaped cross-section. If this is the case, the opening in the C-shaped jacket is preferably substantially perpendicular to the radius of the annular jacket. Hence, during use, the opening does not come into contact with either a stem or a housing between which the seal acts.

In another embodiment of the invention, the resilient jacket has a J-shaped cross-section, the spring being accommodated between the hook of the 'J' and a housing, during use. The straight portion of the 'J' may be clamped between two parts of the housing so that the stem seal is held firmly in position.

Preferably the spring within the jacket is a helical spring. Other alternative forms of spring could possibly also be used.

The helical spring is preferably formed from wound wire.

The resilient jacket is preferably plated with soft metal to reduce the friction between the seal and a stem, during use. The soft metal may be silver, gold, copper, lead or any other suitable material.

By reducing the friction between the seal and a stem or shaft, excessive heat and sparks do not occur during use, thereby making the use of the seal more safe, especially in oil wells or the like.

Depending upon the use of the seal, corrosion resistant materials may also be used for the jacket, the spring or the plating.

The metal stem seal may be manufactured in many different sizes. For example, the cross section of the seal may be approximately 1.2mm for an 8mm stem, or the seal may have a cross section of approximately 4.78mm for a 76mm stem. Many other sizes of metal stem seal according to the invention may also be manufactured. (If the seal comprises a jacket having a J-shaped cross-section, the distance across the hook of the 'J' is considered to be the cross-section of the seal.)

Depending upon the size and/or shape of the seal, the spring may be introduced into the jacket before or after the jacket is plated with the soft metal.

Due to the inclusion of the spring in the jacket, a metal stem seal according to the present invention can provide a satisfactory seal even at high pressures, such as 138 MNm² (20,000 p.s.i.). If the resilient jacket is C-shaped or J-shaped, the seal is preferably used with the open side of the 'C' or 'J' facing the region of highest pressure.

Preferably the resilient jacket is manufactured from a nickel alloy. Any other suitable material could also be used.

Although a metal stem seal according to the present invention may be manufactured by simply inserting a suitable spring into a pre-formed C- or J-shaped resilient jacket, the spring may alternatively be introduced into the jacket before the final shape of the jacket is determined. Further, in a preferred embodiment of the invention, the lips of a C-shaped jacket are more closed than is the case in corresponding C-shaped prior art stem seals, thereby ensuring that the spring does not come free from the jacket during use of the seal.

Specific embodiments of the present invention are now described, by way of example only, with reference to the accompanying drawings, in which:-
Figure 1 is a cross-sectional view of a first embodiment of metal stem seal according to the present invention in situ between a stem and a housing;
Figure 2 is an enlarged cross-sectional view of the metal stem seal shown in Figure 1; and
Figure 3 is a cross-sectional view of a second embodiment of metal stem seal according to the present invention clamped within a housing.

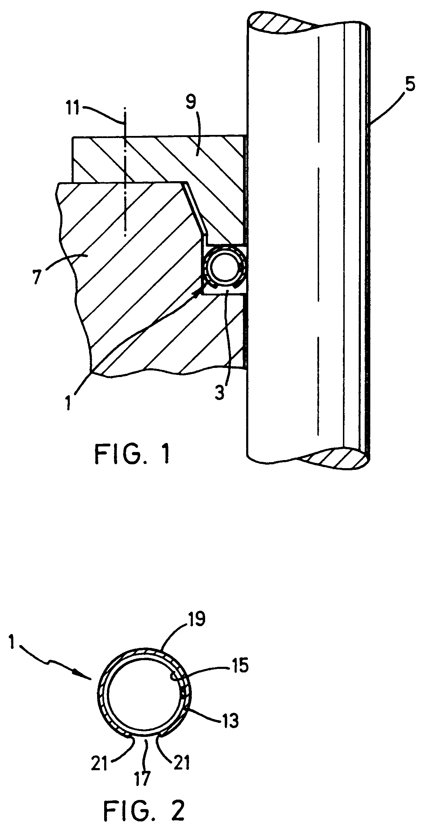

With reference to Figures 1 and 2 of the drawings, a metal stem seal 1 is positioned in a stuffing box 3 between a metal stem or shaft 5 and a housing 7. The seal 1 is held within the stuffing box 3 by means of a retaining plate 9. The retaining plate 9 is fastened to housing 7 by means of retaining bolts (not shown) passing through the retaining plate 9 and into the housing 7 along the axis 11.

As will be appreciated, of course, the housing 7, the retaining plate 9 and the seal 1 pass right round the stem 5 to provide a seal between the stem 5 and the housing 7.

The metal stem seal 1 comprises a resilient jacket 13 having a C-shaped cross section and an helically wound wire spring 15 within the jacket 13 . The opening 17 of the C-shaped section faces in a direction substantially perpendicular to the radius of the annular seal 1. This opening 17 is slightly smaller than that of prior art C-section seals, thereby ensuring that the spring 15 does come free from the jacket 13 during use of the seal 1.

The resilient jacket 13 is plated with a low friction material, such as silver, gold, copper or possibly lead. This plating 19 enables the stem 5 to reciprocate or rotate or both within the housing 7 with less friction than would be the case if the plating 19 were not present.

The resilient jacket 13 is formed of a nickel alloy, the concentration of nickel being dependent upon the application of the seal. Further, depending upon the size of the metal stem seal 1, the spring 15 is either entered into the jacket 13 before the shape of the jacket 13 is finalised or, alternatively, after the shape of the jacket 13 has been finalised. In either event, the plating 19 is applied to the jacket 13 after the shape of the jacket 13 has been finalised, thereby ensuring that the plating 19 is not tarnished during the manufacturing process.

If the spring 15 is entered into the jacket 13 before the shape of the jacket 13 is finalised, the whole seal 1 is passed through a die to close the lips 21 of the jacket 13. This ensures that the spring 15 is under compression from the resilient jacket 13, thus resulting in the jacket 13 being continuously biased outwardly to provide an excellent seal between the stem 5 and the housing 7.

The small cross-section of the seal 1 in comparison to prior art metal stem seals enables the seal 1 to be installed very easily into the stuffing box 3 and to be retained by the single retaining plate 9. The stuffing box 3 is provided with a slightly tapered opening to facilitate entry of the seal 1, during installation. Further, the stem 5 has a slightly tapered end (not shown) to facilitate mounting of the seal 1 onto the stem 5 with an interference fit. In this way, a very good seal is produced between the stem 5 and the housing 7.

If the metal stem seal 1 is used in a high pressure environment, such as 138 MNm⁻² (20,000 p.s.i.), the opening 17 in the jacket 13 is positioned to face the higher pressure region. This ensures that the high pressure acts within the seal 1 to urge the resilient jacket 13 outwards. Hence, as the pressure differential across the seal increases, a higher urging force is produced, thereby resulting in a better seal between the stem 5 and housing 7. The seal 1 is, however, also suitable for use in a low pressure system.

By including the spring 15, the seal 1 has greater strength than any known metal stem seal and enables a stem 5 to reciprocate or rotate or both with very low leak rates between the stem 5 and the housing 7. Indeed, a metal stem seal according to the present invention provides a very flexible and compliant sealing surface which maintains a sufficient sealing load at both low and high pressures, irrespective of the motion of the stem.

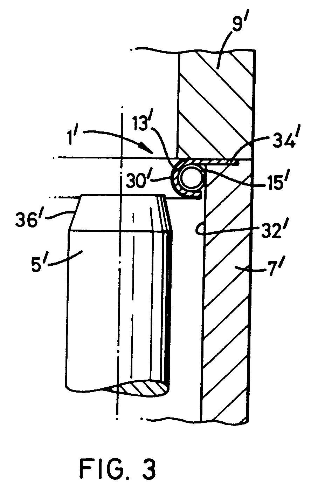

With reference to Figure 3 of the drawings, a second embodiment of metal stem seal 1′ comprises a resilient jacket 13′ having a J-shaped cross-section and an helically wound wire spring 15′ within the jacket 13′. The spring 15′ sits, during use, in a hook portion 30′ of the jacket 13′ and bears against a wall 32′ of a housing 7′. The straight portion 34′ of the J-shaped jacket 13′ is clamped between the housing 7′ and a retaining plate 9′. By positioning the straight portion 34′ correctly between the housing 7′ and the retaining plate 9′, the spring 15′ can be held in compression, thereby urging the jacket 13′ outwardly towards the metal stem 5′ (which, as shown, is not fully entered into the housing 7′ and is not engaging the seal 1′). In this way, an efficient seal is formed by the metal stem seal 1′ between the housing 7′ and the metal stem 5′ when the stem 5′ is in its final position within the housing 7′. (A tapered end 36′ of the stem 5′ facilitates entry of the stem 5′ through the seal 1′ during installation.)

The materials from which the resilient jacket 13 and helical spring 15 of the first embodiment of metal stem seal are manufactured, and the various low friction plating materials applied to the first embodiment mentioned above, can all be used in connection with this second embodiment. Hence, the description thereof will not be re-iterated here.

It will of course be understood that the present invention has been described above purely by way of example, and that modifications of detail can be made within the scope of the invention.

## Claims

1. A metal stem seal (1) comprising a resilient jacket (13) of annular shape and a spring (15) within the jacket (13) to urge the jacket (13) into contact with a stem (5), which reciprocates or rotates or does both, during use.

2. A seal as claimed in claim 1, wherein the resilient jacket (13) has a C-shaped cross-section.

3. A seal as claimed in claim 2, wherein the opening (17) in the C-shaped (13) jacket faces in a direction substantially perpendicular to the radius of the jacket.

4. A seal as claimed in claim 1, wherein the resilient jacket (13′) has a J-shaped cross-section, the spring (15′) being accommodated within a hook portion (30′) of the 'J', during use.

5. A seal as claimed in any preceding claim, wherein the spring (15) within the jacket (13) is a helical spring.

6. A seal as claimed in claim 5, wherein the helical spring (15) is formed from wound wire.

7. A seal as claimed in any preceding claim, wherein the resilient jacket (13) is plated with soft metal (19) to reduce the friction between the seal (1) and a stem (5), during use.

8. A seal as claimed in claim 7, wherein the soft metal (19) comprises silver, gold, copper or lead.

9. A seal as claimed in any preceding claim, wherein the resilient jacket (13) or the spring (15) include corrosion resistant material.

10. A seal as claimed in any preceding claim having a cross-section between 1mm and 5mm in diameter.

11. A seal as claimed in any preceding claim which can accommodate a stem (5) having a diameter of between 5mm and 80mm.

12. A seal as claimed in any preceding claim which is capable of providing a satisfactory seal at pressures in the region of 138 MNm⁻².

13. A seal as claimed in any preceding claim, wherein the resilient jacket (13) is manufactured from a nickel alloy.

14. An apparatus comprising a metal shaft (5) within a metal housing (7) and a metal stem seal (1) according to any preceding claim, wherein the metal stem seal (1) provides a reliable seal between the stem (5) and the housing (7) even when the stem (5) rotates, reciprocates or does both.
